# EUROPÄISCHE PATENTSCHRIFT

(11) **EP 1 979 730 B1**
(45) Veröffentlichungstag und Bekanntmachung des Hinweises auf die Patenterteilung: **01.06.2011**
(21) Anmeldenummer: 06804883.4
(22) Anmeldetag: 23.11.2006
(51) Int. Cl.: G01L 9/00, G01L 21/00

(54) **VAKUUMMESSZELLE MIT MEMBRAN**
VACUUM MEASURING CELL HAVING A MEMBRANE
CELLULE DE MESURE DE VIDE A MEMBRANE

(30) Priorität: 18.01.2006 CH 69062006
(43) Veröffentlichungstag der Anmeldung: 15.10.2008
(73) Patentinhaber: Inficon GmbH, 7310 Bad Ragaz (CH)
(72) Erfinder: WÜEST, Martin, CH-7208 Malans (CH)
(74) Vertreter: Wegmann, Urs
(86) Internationale Anmeldenummer: PCT/CH2006/000656
(87) Internationale Veröffentlichungsnummer: WO 2007/082395

(56) Entgegenhaltungen:
- WO-A-00/28295
- WO-A-99/34184
- PATENT ABSTRACTS OF JAPAN Bd. 1998, Nr. 13, 30. November 1998 (1998-11-30) -& JP 10 206455 A (MURATA MFG CO LTD), 7. August 1998 (1998-08-07)
- BILLMAYER H: "AUSGEWAEHLTE MESSPRINZIPIEN ZUR MESSUNG VON ABSOLUT- UND DIFFERENZDRUECKEN VON GASEN" MESSEN UND PRÜFEN, IVA INTERNATIONAL, MÜNCHEN, DE, Bd. 27, Nr. 5, 1. Mai 1991 (1991-05-01), Seiten 216-223, XP000235012 ISSN: 0937-3446

## Beschreibung

Die Erfindung bezieht sich auf eine Vakuummesszelle mit Membran gemäss Oberbegriff des Patentanspruches 1.

Totalvakuummesszellen werden benutzt, um den Gesamtdruck in Vakuumkammern zu messen. Die Vakuummesszellen werden bei der Überwachung von verschiedenen Vakuumprozessen eingesetzt. Typische Vakuumprozesse sind hierbei Oberflächenbearbeitungsprozesse wie beispielsweise Beschichtungsverfahren und Ätzverfahren. Derartige Verfahren arbeiten beispielsweise in Druckbereichen von 10⁻⁵ mbar bis 100 mbar. Es ist üblich, derartige Druckbereiche zu messen mit sogenannten Pirani Vakuummesszellen oder mit sogenannten Membran-Vakuummesszellen. Hierbei besteht ein Problem darin, dass das Prozessgas aber auch Restgaskomponenten den Vakuumsensor während des Prozesses kontaminieren können. In der Folge können hierbei ungenaue oder fehlerhafte Messungen entstehen bzw. Druckanzeigen. Die Vakuummesszellen zeigen hierbei ein Driftverhalten entsprechend der Zeit, die sie dem Prozess ausgesetzt sind, welches nicht immer durch Reinigen der Vakuummesszelle bzw. deren Umgebung beseitigt oder wieder hergestellt werden kann. Membranmesszellen sind besonders empfindlich in Bezug auf mögliche Kontaminationen. Bei derartigen Membranmesszellen wird eine dünne Membran ausgelenkt abhängig vom vorliegenden Druck, der zu messen ist. Die Auslenkung dieser Membran wird gemessen und dient als Mass für den zu messenden Vakuumdruck. Bei kapazitiven Membran-Messzellen wird die Auslenkung der Membran über die Veränderung der Kapazität zwischen Membran und dem Festkörper gemessen. Bei optischen Membran-Messzellen wird diese Auslenkung mit optischen Methoden erfasst, beispielsweise mit interferometrische Methoden. Um derartige Druckbereiche mit hoher Empfindlichkeit messen zu können, müssen hierbei die Membranen sehr dünn ausgebildet werden, beispielsweise im Bereich von 40 bis 760 µm. Kontaminationen dieser dünnen Membran, beispielsweise mit Gas und / oder mit Partikeln wodurch gar eine Ablagerungsschicht entstehen kann, können an der Membran zu Zug- und / oder Druck-Spannungen führen, welches die Deformation der Membran zusätzlich beeinflusst und in der Folge zu Fehlmessungen führt, beispielsweise in den zu messenden absoluten Werten oder zu einem unerwünschten Driftverhalten über die Zeit führt. Hierbei wird ausserdem die Auflösung und somit die Präzision der Messzelle verringert und andererseits ist die Reproduzierbarkeit der Messresultate nicht gewährleistet.

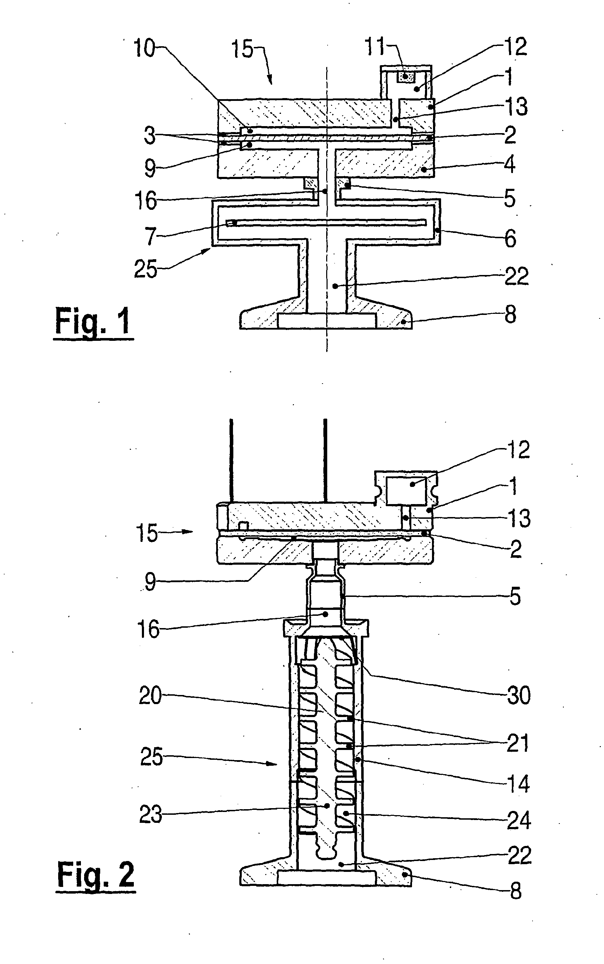

Um derartige Kontaminationen zu verringern, wurde bis anhin eine flache Blende, in der Fachwelt auch Baffle genannt, verwendet, wie dies am Beispiel einer kapazitiven Membran-Vakuummesszelle in Fig. 1 dargestellt ist. Die Vakuummesszelle 15 besteht aus einem ersten flachen und runden Gehäuseteil 1 und einem zweiten flachen und runden Gehäuseteil 4, wobei zwischen diesen beiden Gehäuseteilen eine Membran 2 über Dichtungen 3, beispielsweise einem Glaslot, dichtend verbunden ist, derart dass zwischen der Membran und den beiden Gehäuseteilen je ein Hohlraum 9, 10 ausgebildet wird. Der eine Hohlraum bildet einen Referenzvakuumraum 10, welcher über eine Verbindung 13 mit einem Getterraum 12 kommuniziert. Im Getterraum 12 ist ein Getter 11 angeordnet, zur sicheren Aufrechterhaltung eines Referenzvakuums. Gegenüber dem Referenzvakuumraum 10 auf der anderen Seite der Membran 2 ist der Messvakuumraum 9 ausgebildet, welcher über eine Ausgangsöffnung 16 mit dem Blendengehäuse 6, in welchem eine Blende 7 angeordnet ist, kommuniziert, wobei das Blendengehäuse beispielsweise über einen Anschlussstutzen 5 mit der Vakuummesszelle 15 entsprechend verbunden ist. Am Blendengehäuse 6 ist ein Anschlussflansch 8 angeordnet mit einer Anschlussöffnung 22, welche mit der zu messenden Vakuumprozesskammer verbunden werden kann. Hierbei ist die Anschlussöffnung 22 derart angeordnet, dass die Blende 7 gegenüber der Ausgangsöffnung 16 der Vakuummesszelle keinen direkten Durchblick ermöglicht: Hiermit soll die Blende 7 ihre Schutzwirkung entfalten, dadurch dass die unerwünschten Gase bzw. Partikel an der Blendenoberfläche kondensiert werden, so dass sie nicht in die Vakuummesszelle hinein gelangen. In der Fachliteratur wird diese Blende oft auch als Plasma-shield bezeichnet. Bei Prozessen, die reaktive Gase enthalten, sollen diese auf der Blende bevorzugt kondensiert werden. Hierdurch soll die Sensordrift verringert werden und dadurch die Lebensdauer der Messzelle vergrößert werden. Obwohl diese flache Blende die Lebensdauer der Messzelle verbessert, kann nicht verhindert werden, dass immer noch ein nennenswerter Anteil an Teilchen um die Blende herum, beispielsweise auch durch Streuprozesse gefördert, bis zu der Messmembran gelangen und dort die Messung verfälschen.

Eine Messzelle der zuvor beschriebenen Art für tiefe zu messende Drücke ist auch in der WO 99/34184 beschrieben, wobei die Messzelle mit den beiden Gehäusekörpern und der Membran aus Aluminiumoxid gefertigt sind, um hohe Korrosionsbeständigkeit zu erzielen. Es wird dort insbesondere die aufwendige Herstellung einer derartigen Präzisionsmesszelle beschrieben. Auf das Problem von möglichen Sensordriften durch Ablagerungsschichten, abgeschieden aus dem zu messenden Prozess, wird nicht eingegangen.

Eine kapazitive Druckmesszelle mit einer Membrane aus Metall wird in der WO 00/28295 A1 beschrieben. Die Messzelle enthält zwei kapazitive Sensorelemente welche an dieselbe Membrane angekoppelt sind. Die Membrane selbst wird in radialer Richtung über eine Wellenartige, balgartige, konzentrische Ausbildung in zwei elastische Bereiche unterteilt derart dass der periphere Bereich sich bei Druckeinwirkung weniger gegenüber dem ersten Kondensatorbelag bewegt als der zentrale Membranbereich gegenüber dem zweiten Kondensatorbelag. Dadurch werden die beiden Kondensatoren gewissermassen entkoppelt. Die Anordnung soll eine bessere Erdung ermöglichen und eine besseres Signalverhältnis.

In der JP10206455 A wird das Kapseln von elektronischen Bauteilen unter reduziertem Druck beschrieben. In einer Ausführungsvariante wird das Bauteil in einem Gehäuse gekapselt, bei welchem eine Gehäusewand dünn ausgebildet wird, dass diese eine Membrane bildet welches sich abhängig vom Innendruck verbiegt. Auf der Aussenseite ist ein Widerstands - Dehnungsmesstreifen angebracht mit welchem die Durchbiegung der Gehäusewand und somit der Innendruck (Vakuum) gemessen werden kann.

Im Artikel Billmayer H: Ausgewählte Messprinzipien zur Messung von Absolut- und Differenzdrücken von Gasen (118 Messen Prüfen Automatisieren Bd. 27, Nr. 5, 1. Mai 1991) wird allgemein das Messprinzip von Kapazitiven Druckaufnehmer beschrieben.

Eine weitere kapazitive Druckmesszellenanordnung wird in der US 2004/0226382 A1 beschrieben. Die Anordnung geht von bekannten kapazitiven Messzellen aus mit einer Membran und zwei koaxial angeordneten Kondensatoren - Elektroden, die auf die Membrane koppeln und womit die Durchbiegung bei Druckeinwirkung gemessen wird. Es wird das Problem angesprochen, dass bei wichtigen Anwendungen der Druckmessung die Membrane durch den zu messenden Prozess Partikel oder Schmutzstoffe bis zur Membrane gelangen können und sich dort ablagern. Dadurch wird die Auflösung der Messzelle negativ beeinflusst und es kann ein unerwünschtes Driftverhalten entstehen. Bis anhin wurde versucht mit "baffles" (Abschirmungen), einer Art Filter, diesem Problem entgegen zu wirken. Die vorliegende Schrift schlägt eine bessere Abschirmungsanordnung vor mit mehreren "baffles" und spezieller Anordnung, um die Beschichtung der Membrane zu verringern.

Die Aufgabe der vorliegenden Erfindung besteht darin, die Nachteile des Standes der Technik zu beseitigen. Insbesondere besteht die Aufgabe der vorliegenden Erfindung darin, eine Membran - Vakuummesszelle zu realisieren, welche unempfindlich ist gegenüber Kontamination der Vakuummesszelle, insbesondere der Membran, um dadurch die Lebensdauer der Messzelle wesentlich zu erhöhen, bei Gewährleistung der hohen Messgenauigkeit und Reproduzierbarkeit der Vakuummessung. Ausserdem soll die Membranmesszelle wirtschaftlich herstellbar sein.

Die Aufgabe wird bei der gattungsgemässen Vakuummesszelle mit Membran gemäß den Merkmalen des Patentanspruches 1 gelöst.

Die abhängigen Patentansprüche beziehen sich auf vorteilhafte weitere Ausgestaltungen der Erfindung.

Die erfindungsgemäße Messzelle enthält eine Membran, die zwischen zwei flachen Gehäuseteilen angeordnet ist, wobei das erste Gehäuseteil einen Referenzvakuumraum und das zweite Gehäuseteil einen Messvakuumraum mit Anschlussmitteln zur Verbindung mit dem zu messenden Medium aufweist und dass Mittel vorgesehen sind zur Messung der Membranauslenkung. An der, dem zu messenden Medium zugewandten Seite der Membranoberfläche weist die Membranoberfläche Strukturen auf, wodurch Verspannungen der Membrane vermindert oder verhindert werden, auch wenn die Messzelle längere Zeit einem Medium ausgesetzt ist welches stark kontaminierend ist. Der Einsatz bei solchen Medien wird dadurch allenfalls erst ermöglicht oder es wird die Lebensdauer der Messzelle unter Einhaltung der erforderlichen Messgenauigkeit wesentlich erweitert.

Die Strukturierung kann im einfachsten Fall als stufenförmiges Linienmuster ausgebildet sein welches dafür sorgt, dass Ablagerungsschichten immer wieder in kleinere Zonen unterteilt werden, sei es durch verdünnte Trennlinien oder vorzugsweise durch Unterbrüche, so dass in ihrer Verspannungswirkung eine Unterteilung über die Membranfläche auftritt. Die Anordnung der Struktur kann gitterförmig sein, mit periodischen und/oder nicht periodischen Abständen oder sie kann konzentrisch angeordnet sein oder in andere Teilbereiche unterteilt werden.

Die Strukturierung kann mit Vorteil auch überhängende Stufen aufweisen derart, dass die Kante im Frontbereich eine Art Abschattung bewirkt und der Grund der Stufe zumindest im Kantenbereich nur wenig oder gar nicht beschichtet wird durch die Ablagerungen und dadurch die spannungserzeugende Schicht unterbrochen wird oder die Spannung zumindest geschwächt wird.

Weiterhin vorteilhaft ist es wenn die Strukturen stark überhängend sind, so dass sie im Querschnitt eine tischartige oder pilzartige Form aufweisen. Es kann auch mit Vorteil mehr als eine derartige Struktur übereinander angeordnet werden, so dass ein direkter Durchblick von der Frontseite auf den Grund der Membran bei den Öffnungen in der Struktur vermieden wird. Durch diese Art Labyrinthbildung kann mit hohem Grad vermieden werden, dass die Kontamination bis auf den Grund der Membran gelangt, und dies auch bei Partikelstreuung, wobei ein sicherer Unterbruch de Ablagerungsschicht und somit des Spannungsaufbaus vermieden wird.

Die Höhe der Strukturen soll derart gewählt werden, dass entsprechend der zu erwartenden Dicke der Ablagerungsschicht ein sicherer Unterbruch der Ablagerungsschicht erzielt wird, also etwa im Bereich von 0,1 µm bis 10 µm, vorzugsweise von 0,1 µm bis 5,0 µm. Die Breite der Strukturen sollen klein genug sein, um ebenfalls die Spannungen genügend unterbrechen zu können. Diese liegen günstig wenn sie im Bereich von der zwei bis 20 fachen der Strukturdicke liegen.

Das Material der Strukturen wird mit Vorteil gleich gewählt wie dasjenige der Membran. Bei der besonders bevorzugten Anwendung für kapazitive und/oder optische Vakuummesszellen enthalten diese mindestens im wesentlichen A1203 und/oder Saphir oder bestehen ganz aus mindestens einem dieser Materialien.

Derartige Strukturen können durch chemische Ätzprozesse und/oder bevorzugt durch Vakuumprozesse, wie insbesondere durch Vakuumplasmaprozesse, wie durch Sputterätzen oder insbesondere plasmachemisches Ätzen (auch reaktives Ätzen genannt) erzeugt werden. Es können auch Abhebetechniken, wie der sogenannte Liftoff - Prozess, wie er seit langem in der Halbleiterindustrie bekannt ist, verwendet werden. Die Strukturen können direkt in die Membran eingebracht werden und/oder aber auch in eine zuvor aufgebrachte dünne Schicht.
Bei den tischförmigen Anordnungen mit sehr starkem Überhang und speziell bei den mehrfach übereinander angeordneten Strukturen können diese hergestellt werden, indem schrittweise beschichtet wird und danach die gewünschten Strukturelemente geätzt werden. Bei der Verwendung von Vakuumprozessen können sowohl die Beschichtungs-, wie auch die Ätzschritte in derselben Vakuumanlage erzeugt werden.

Besonders günstige Ergebnisse für die Vakuummesszelle werden erzielt, wenn eine derart mit Strukturen versehene Membran verwendet wird in Kombination mit einer Blendenanordnung angeordnet zwischen Messvakuumraum der Messzelle, also der Membran, und dem zu messenden Medium. Die Blende kann hierbei eine Flachblende gemäss Stand der Technik sein, wie zuvor beschrieben. Eine noch besser geeignete Blende ist die helixförmige Blende bzw. die Schraubenblende, wie sie nachfolgend beschrieben wird.

Die Schraubenblende oder Helixblende ist in einem Rohrstück zwischen dem Sensor und dem Flansch zu der Vakuumprözesskammer angeordnet. Diese Blende kann auch zusätzlich zu bestehenden bekannten Blenden, wie zuvor beschrieben, eingesetzt werden. Die Schraubenblende kann außerdem mehrere Pfade aufweisen, um die Abschirmwirkung zusätzlich zu vergrössern. Durch die schraubenförmige Ausbildung der Blende wird eine direkte Durchsicht von der Anschlussöffnung zur Vakuummesszelle sicher vermieden, wodurch die Teilchen und / oder auch die Partikel gezwungen sind mehrfach mit der Oberfläche zu interagieren bevor sie das Ende der Blende erreichen können. Es ist von Vorteil, wenn die Blende derart ausgebildet ist, dass diese leicht entfernt werden kann für eine Reinigung oder um diese auswechseln zu können. Hierzu können mit Vorteil Halteelemente, beispielsweise federnde Elemente, vorgesehen werden an der Blende selbst und / oder auch am rohrförmigen Gehäuse, um die Blende in Position halten zu können. Es ist günstig, die Blende und / oder das Gehäuse aus einem Material zu fertigen, das prozesskompatibel ist, um eine genügend große Lebensdauer zu gewährleisten und zusätzliche Kontaminationen durch mögliche Zersetzungen zu vermeiden. Reaktive Prozesse insbesondere reaktive Plasmaprozesse enthalten oft aggressive Gase und verhalten sich entsprechend reaktiv, auch in Bezug auf die verwendeten Materialien der eingesetzten Bauteile. Die hier exponierten Bauteile, wie Blende und / oder Gehäuse, können hierzu auch mit geeigneten resistenten Materialien beschichtet sein.

Die Erfindung wird nun anhand von Figuren schematisch und beispielsweise beschrieben. Es zeigen:
- Fig.1: schematisch und im Querschnitt eine Membran- Vakuummesszelle mit einer Flachblende;
- Fig.2: schematisch und im Querschnitt eine Membran- Vakuummesszelle mit einer Schraubenblende;
- Fig. 3a: im Querschnitt ein Ausschnitt einer verbogenen Mem- bran mit Ablagerungsschicht;
- Fig. 3b: im Querschnitt ein Ausschnitt einer Membran mit stu- fenförmigen Strukturen an deren Oberfläche entspre- chend der Erfindung;
- Fig. 3c: wie Figur 3b, aber mit überhängenden Stufen der Struktur;
- Fig. 3d: im Querschnitt ein Ausschnitt einer Membran mit tischförmigen Strukturen an deren Oberfläche entspre- chend der Erfindung;
- Fig. 3e: im Querschnitt ein Ausschnitt einer Membran mit zwei übereinander verschachtelt angeordneten tischförmigen Strukturen an deren Oberfläche entsprechend der Er- findung;

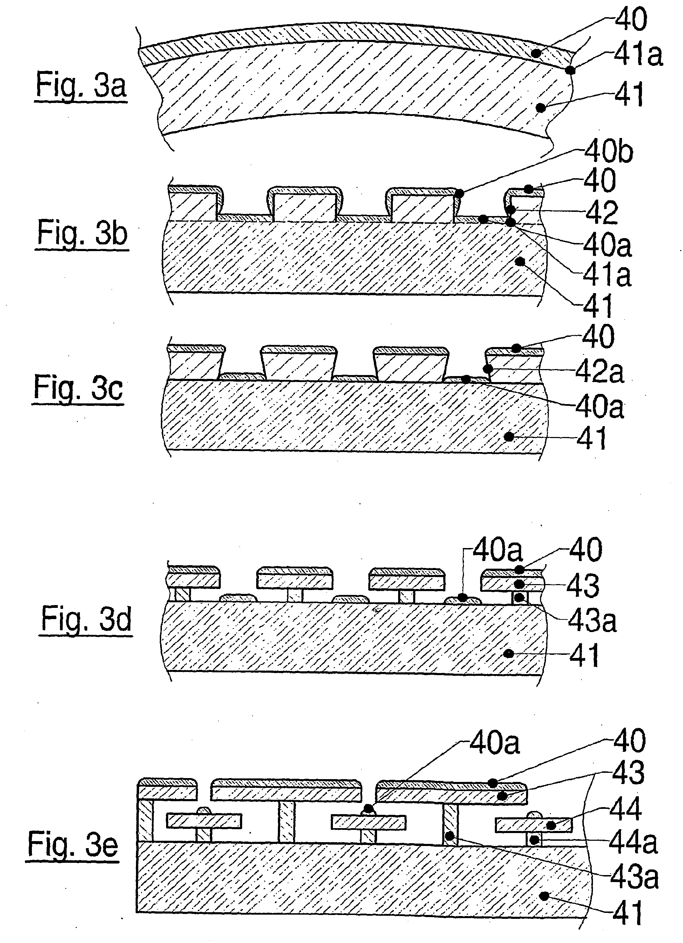

Verschiedene Beispiele für strukturierte Membranoberflächen für Vakuummesszellen werden entsprechend der Erfindung in den Fig. 3a bis 3e beispielsweise beschrieben. Die Figuren zeigen jeweils einen Ausschnitt einer Membran 41 im Querschnitt. Die Membran besteht bevorzugterweise im wesentlichen aus einer Keramik, wie Al₂O₃, und / oder aus Saphir, wie einkristallinem Al₂O₃. Bei der Verwendung in kapazitiven Vakuummesszellen ist eine Oberfläche der Membran 41 auf der dem zu messenden Medium abgewandten Seite in bekannter Weise mit einem elektrisch leitenden Belag beschichtet, welcher die eine Elektrode eines Kondensatorsystems bildet. Je nach anliegendem Druck an der Membran deformiert sich die Membran 41 entsprechend und der Abstand der Elektroden des Kondensators verändert sich und somit dessen Kapazität, welche gemessen und ausgewertet wird und ein Signal bildet, welches korreliert ist mit der zu messenden Druckgröße. Bei der optischen Membranvakuummesszelle wird die Auslenkung der Membran optisch gemessen, beispielsweise über ein Fabry-Perot-System. Wird nun die Membran 41 auf der Medienseite kontaminiert, kann eine Art Ablagerungsschicht 40 auf der Membranoberfläche 41a kondensieren und diese Ablagerungsschicht 40 erzeugt durch ihre gegenüber der Membran 41 unterschiedlichen Materialeigenschaften unerwünschte Spannungen, welche zu einer Deformation der Membran 41 führt, wie dies in Fig. 3a schematisch dargestellt ist. Diese Deformation der Membran '41 durch die unerwünschten Verspannungen der Membran führen zu einer Verfälschung des Messergebnisses und schränken die Genauigkeit der Messung und insbesondere die zeitliche Verwendbarkeit bzw. die Lebensdauer der Messzelle ein. Dieses Problem ist um so mehr von Bedeutung, da die Membranmesszellen der vorerwähnten Art mit Keramikmembranen oder Saphirmembranen, insbesondere bei kontaminationskritischen Prozessen, Verwendung finden, wie beispielsweise bei Plasmaprozessen, insbesondere bei reaktiven und chemisch reaktiven Prozessen.

Um derartige unerwünschte Spannungen in der Membran 41 zu vermeiden, wird entsprechend der Erfindung vorgeschlagen, die Membranoberfläche 41a derart zu strukturieren, dass Spannungen erzeugt durch eine Ablagerungsschicht 40 an der Membran 41 unterteilt bzw. unterbrochen werden und dadurch insgesamt stark vermindert werden, dass die Membran 41 durch die Ablagerungsschicht 40 weniger zusätzlich gebogen wird. Eine einfache stufenförmige Strukturierung ist in Fig. 3b dargestellt. Die Oberfläche der Membran ist hierbei als Beispiel mit linienförmigen Vertiefungen, einer Art Raster, versehen, wodurch die Ablagerungsschicht 40 über die Seitenbedeckung 40b der Stufenwand je nach den Ablagerungsbedingungen mehr oder weniger dünner wird oder gar am Grund der Vertiefung im Kantenbereich unterbrochen sein kann. Die Grundbedeckung 40a der Ablagerungsschicht bildet dann im günstigsten Fall mit der oberen Bedekkung keine zusammenhängende Beschichtung der Membran mehr. Derartige Strukturen können mit Vorteil gitterförmig angelegt werden. Sie können direkt aus dem Membranmaterial herausgearbeitet werden, beispielsweise durch Plasmaätzen oder chemisches Ätzen oder auch mit Hilfe von Lift-off-Prozessen, wie sie an sich bekannt sind. Die Strukturen können aber auch dadurch erzeugt werden, dass eine zusätzliche Schicht auf die ursprüngliche Membranoberfläche 41a aufgebracht wird und diese dann strukturiert wird. In diesem Fall sollte das Schichtmaterial vorzugsweise ähnlich oder identisch dem Membranmaterial sein und selbst keine zusätzlichen Spannungen erzeugen. Die Dicke bzw. Höhe der Struktur sollte größer sein als die zu erwartende Dicke der Ablagerungsschicht 40. Günstige Werte liegen im Bereich von 0,1 µm bis 20 µm oder gar im Bereich von 0,1 µm bis 10 µm. Die bei derartigen Messzellen verwendeten Membrandicken liegen im Bereich von 40 µm bis 760 µm bei einem Membrandurchmesser von vorzugsweise 5 bis 80 mm. Um die Spannungen geeignet abbauen zu können, muss die Ablagerungsschicht genügend oft über der Membranfläche unterteilt bzw. gedünnt werden. Praktisch werden günstige Ergebnisse erreicht, wenn die Unterteilung in einem Bereich liegt, welches dem zweifachen bis 20-fachen der Strukturdicke liegt.

Eine weitere verbesserte Ausbildung einer strukturierten Membranoberfläche ist in Fig. 3c dargestellt. Die Stufen 42 der Vertiefungen sind im Gegensatz zu den senkrechten Stufen gemäss Fig. 3b hier als überhängende Stufen 42a ausgebildet, wodurch eine noch bessere Wirkung im Bezug auf die gewünschte Spannungsunterteilung der Ablagerungsschicht 40, 40a erzeugt wird. Derartige überhängende Stufen können mit bekannten Ätzprozessen durch gezieltes Unterätzen erzeugt werden.

Eine Weiterführung der vorerwähnten überhängenden Struktur führt zu einer Strukturierung mit tischförmigen Querschnitt wie dies in Fig. 3d dargestellt ist. Auf einem weit auskragenden Tisch 43 wird die Ablagerungsschicht 40 abgelegt und durch die starke Auskragung wird im Öffnungsbereich zwischen den Tischen 43 im Spaltbereich auf der Membranoberfläche 41a die Ablagerungsschicht als unterbrochene Grundbedeckung abgelegt. Die Tischplatte 43 ruht auf einem relativ schmalen Tischfuss 43a, der exzentrisch oder zentrisch unter der Tischplatte 43 liegen kann und dafür sorgt, dass der Überhang der Tischplatte gross genug ist, um die Ablagerungsschicht möglichst sicher durch Abschattung zu unterbrechen. Um noch sicherer zu gehen, können zusätzliche tischartige Strukturen 44 mit dem Fuss 44a über die erste tischartige Struktur gelegt werden, um eine noch sichere Abschattungswirkung und somit Unterbrechung der Ablagerungsschicht 40 durch eine labyrinthartige Struktur zu erzielen gemäss Fig. 3e. Derartige Strukturen können nicht mehr direkt durch einzelne Ätzschritte erzielt werden, sondern müssen durch verschiedene Beschichtungs- und Ätzprozesse realisiert werden.

Bei einem Beispiel mit einer Strukturierung gemäss Fig. 3c mit stark überhängenden Stufe 42a wurde eine Ablagerungsschicht 40 mit einer Schichtdicke von 100 nm an der Vorderseite der Struktur gemessen, wobei die Ablagerungsschicht 40 hauptsächlich aus Silizium bestand. Die Strukturierung wurde auf einer Aluminiumoxidmembran mit einem Durchmesser von 19 mm durch Plasmaätzen erzeugt. Die Membrandicke lag bei 400 µm. Die Tiefe der geätzten Struktur lag bei etwa 20µm und die Abstände des gitterartigen Rasters bzw. der einzelnen Strukturen bei etwa 40µm und die Breite der eingeätzten Struktur bei etwa 30µm. Dies entspricht bei einer tischartigen Struktur etwa einer Tischbreite von 30µm bei einer Tischplattendicke von etwa 10µm bei ebenfalls einer Tischhöhe von 10µm und einem Tischfussbreite von etwa 10µm.
Ohne Gitterstruktur wurde durch die Ablagerungsschicht 40 eine mechanische Spannung von etwa 1 GPa erzeugt und hierdurch deformierte sich die Membran um 3,5 µm. Durch die Strukturierung konnte die Deformation um den Faktor 7 verringert werden, also etwa auf 0,5 µm. Dies entspricht einem Messfehler von 14% bei einem gemessenen Druck von 13 mbar. Wie das vorerwähnte Beispiel zeigt kann durch das erfindungsgemäße Vorgehen die Messgenauigkeit bzw. die Lebensdauer der Membranvakuummesszelle drastisch verlängert werden. Günstig ist wenn die Breite bzw. Abstände der Strukturelemente in einem Hauptraster der strukturierten Membranoberfläche angeordnet sind die im Bereich im Bereich von 10µm bis 50µm liegen. Wenn eine Tischstruktur 43 verwendet wird, sind Tischplattendicken von 1 bis 3 µm besonders geeignet, wobei die Tischfussbreite bis zu einem drittel kleiner ist als der Tischplattendurchmesser welcher selbst um einige µm geringer gewählt wird als der Rasterabstand. Die Spaltbreite zwischen den Strukturen sollte aber zumindest gröβer gewählt werden als die zu erwartende oder zugelassene Dicke der Ablagerungsschicht. Durch das erfindungsgemäße Vorgehen kann das Driftverhalten einer Membranvakuummesszelle um bis zu einem Faktor zehn verringert werden.

In Fig. 2 ist eine Vakuummesszellenanordnung im Querschnitt dargestellt mit einer Membran-Vakuummesszelle 15 und einer daran angeordneten Blendenanordnung 25 mit einer Schraubenblende 20, die als spiralförmige Blende bzw, als helixförmige Blende ausgebildet ist und welche sich besonders eignet in Kombination mit der strukturierten Membran eingesetzt zu werden. Die Vakuummesszelle 15 besteht aus einem ersten flachen runden Gehäuseteil 1 und einem zweiten runden flachen Gehäuseteil 4, wobei dazwischen an der Peripherie dichtend eine Membran 2 angeordnet ist. Die Membrane 2 ist gegenüber dem ersten Gehäuseteil 1 derart leicht beabstandet angeordnet, dass dazwischen ein Referenzvakuumraum ausgebildet wird, welcher über eine Verbindungsleitung 13 mit einem Getterraum 12 zur Aufrechterhaltung eines Referenzvakuums aufweist. Auf der gegenüberliegenden Membranseite zwischen der Membrane 2 und dem zweiten Gehäuseteil 4 ist ein Messvakuumraum 9 ausgebildet, der bevorzugt im Zentrum durch das zweite Gehäuseteil 4 über eine Öffnung und einen Anschlussstutzen 5 mit der Blendenanordnung 25 kommuniziert, welche wiederum eine Anschlussöffnung 22 aufweist, welche mit dem zu messenden Vakuumraum kommunizierend verbunden werden kann. Hierbei ist die Schraubenblende 20 innerhalb eines Rohrstückes 14 angeordnet, derart dass die Windungen 21 der Schraubenblende 20 derart an der Innenwandung des Rohrstückes 14 anliegt, dass in diesem Kammbereich der Windungen 21 zumindest eine Hemmung für das Durchströmen von Teilchen entsteht, vorzugsweise aber möglichst eine Abdichtung in den bevorzugt zu messenden Druckbereichen.

Die Windungen 21 der Schraubenblende 20 sind derart ausgebildet, dass ein spiralförmiger Pfad 24 entsteht, der im Vergleich zum Querschnitt des Schraubenmateriales einen möglichst großen Querschnitt eines freien Pfades 24 entstehen lässt, um einen genügend hohen Leitwert zu erzielen. Die Windungen 21 der Schraubenblende 20 sind deshalb bevorzugt als flachgängige Schraube 20 ausgebildet, welche somit eine Art blechförmige Spirale darstellt. Um den Querschnitt des Pfades 24 möglichst groß in Bezug zum Festkörpermaterial zu erhalten, kann der Kern 23 mit einem möglichst geringen Durchmesser ausgebildet werden oder ganz weggelassen werden. Es ist allerdings von Vorteil, wenn der Kern einen gewissen Durchmesser im Bereich von beispielsweise 2 bis 6 mm aufweist, um der spiralförmigen Schraubenblende 20 eine entsprechende Stabilität zu verleihen und insbesondere auch um die Enden als Halterungen benützen zu können, einerseits zur Halterung der Blende innerhalb des Rohres in der Position und andererseits um auf der anderen Seite eine Art Griff auszubilden, welcher es erleichtert, die Blende einfach aus dem Rohr zu ziehen, wenn diese ausgewechselt werden soll zu Reinigungszwecken.

Die eine Seite des Rohrstückes 14 bildet die Ausgangsöffnung 16 der Blendenanordnung 25 und ist kommunizierend mit dem Messvakuumraum 9 der Vakuummesszelle 15 verbunden. Die andere Seite des Rohrstückes 14 bildet die Anschlussöffnung 22 für das zu messende Vakuumvolumen und kann vorteilhaft direkt einen Anschlussflansch 8 aufweisen oder als Anschlussflansch 8 ausgebildet sein. Hierbei kann der Anschlussflansch 8 bevorzugt als sogenanntes Kleinflanschbauteil ausgebildet sein, wie diese in den Abmessungen in der Vakuumtechnik üblicherweise verwendet werden, um verschiedene Rohranschlüsse auf einfache Art herstellen zu können. Insbesondere werden hierbei mit Vorteil die in der Vakuumtechnik bekannten Flansche vom Typ CF, KF und VCR verwendet.

In axialer Längsrichtung betrachtet von der Anschlussöffnung 22 in Richtung der Ausgangsöffnung 16 der Blendenanordnung 25 sollte diese keinen Durchblick ermöglichen, also optisch dicht sein. Die Schraubenblende 20 soll hierbei mindestens 1,5 Windungen 21 aufweisen. Es ist allerdings vorteilhaft, wenn die Schraubenblende 20 als mehrgängige Schraube ausgebildet ist und mehrere Windungen 21 aufweist, beispielsweise 3 bis 10 Windungen. In vielen Fällen ist es hinreichend, wenn das Rohrstück 14 und / oder die Blende 20 aus einem Inox-Material besteht. Bei sehr schwierigen zu messenden Verhältnissen, wo sehr aktive und aggressive Prozessgase Verwendung finden, ist es insbesondere bei der Blendenanordnung 25 von Vorteil, wen die Blende 20 und / oder das Rohrstück 14 aus einem Material gefertigt ist, welches den aggressiven Prozessbedingungen möglichst gut widerstehen kann und nicht noch zusätzlich durch Zersetzung Verunreinigungen produziert werden. Um Kosten zu senken und spezielle Materialeigenschaften einfacher zu erzielen, können die exponierten Flächen des Rohrstückes 14 und / oder der Blende 20 auch mit den entsprechenden Schutzmaterialien beschichtet werden. In gewissen Fällen kann es auch von Vorteil sein, wenn diese Materialien abgestimmt werden mit der Art des Materials der Membran 2 der Vakuummesszelle 15.

Die Schraubenblende 20 erlaubt das zusätzliche Optimieren der Schutzeigenschaften für die Membran 2 der Vakuummesszelle 15 auf vielfältige Art und Weise.

## Patentansprüche

1. Vakuummesszelle mit einer zwischen zwei flachen Gehäuseteilen (1, 4) angeordneten Membran (2, 41) mit einer Dicke im Bereich von 40 µm bis 760 µm, wobei das erste Gehäuseteil (1) einen Referenzvakuumraum (10) und das zweite Gehäuseteil (4) einen Messvakuumraum (9) mit Anschlussmitteln (5) zur Verbindung mit dem zu messenden Medium bildet und dass die Vakuummesszelle im Bereich des Referenzvakuumraumes (10) Mittel zur Messung der Membranauslenkung enthält, **dadurch gekennzeichnet, dass** auf der Membranoberfläche (41a), welche dem zu messenden Medium ausgesetzt ist, eine gezielt ausgebildete Struktur mit senkrechten und / oder überhängenden Stufen (42) angebracht ist mit einer Dicke im Bereich von 0,1 µm bis 20 µm, wobei deren Breite im Bereich des zwei bis 20 fachen der Strukturdicke liegen.

2. Messzelle nach Anspruch 1 **dadurch gekennzeichnet, dass** die Struktur die Stufen (42) Kanten aufweisen, wodurch eine Abschattung auftritt bei der Ablagerung einer Schicht, derart dass eine sich vom Medium auf der Membran (2, 41) abgeschiedene Ablagerungsschicht (40) im wesentlichen spannungsfrei gegenüber der Membran verhält, wodurch eine Spannungsverbiegung der Membran (2, 41) verringert ist.

3. Messzelle nach Anspruch 1 oder 2 **dadurch gekennzeichnet, dass** die Membrane (2, 41) im wesentlichen aus Keramik, wie Al₂O₃, und / oder aus Saphir, wie einkristallinem Al₂O₃ besteht.

4. Messzelle nach einem der vorhergehenden Ansprüche **dadurch gekennzeichnet, dass** die Vakuummesszelle mit der Membrane (2, 41) eine kapazitive und / oder eine optische Messanordnung bildet.

5. Messzelle nach einem der vorhergehenden Ansprüche **dadurch gekennzeichnet, dass** der Durchmesser der Membran im Bereich von 5 bis 80 mm liegt.

6. Messzelle nach einem der vorhergehenden Ansprüche **dadurch gekennzeichnet, dass** die Struktur auf der Membran (2, 41) gitterförmig mit periodischen und / oder nicht periodischen Abständen angeordnet ist.

7. Messzelle nach einem der vorhergehenden Ansprüche **dadurch gekennzeichnet, dass** die Struktur in das Membranmaterial eingearbeitet ist.

8. Messzelle nach einem der vorhergehenden Ansprüche **dadurch gekennzeichnet, dass** auf der Membranoberfläche (41a) mindestens eine Schicht abgelegt ist, welche strukturiert ist, und dass das Schichtmaterial vorzugsweise aus Al₂O₃ und / oder Saphir besteht.

9. Messzelle nach einem der Ansprüche 1 bis 8 **dadurch gekennzeichnet, dass** die Struktur stark überhängende Stufen aufweist, so dass sie im Querschnitt eine tischartige oder pilzartige Form aufweist, wobei vorzugsweise mehr als eine derartige Struktur übereinander angeordnet ist, so dass ein direkter Durchblick von der Frontseite auf den Grund der Membran bei den Öffnungen in der Struktur vermieden wird.

10. Messzelle nach einem der vorhergehenden Ansprüche **dadurch gekennzeichnet, dass** die Dicke der Struktur im Bereich von 0,1 µm bis 10 µm liegt.

11. Messzelle nach einem der vorhergehenden Ansprüche **dadurch gekennzeichnet, dass** zwischen die Anschlussmittel (5) des Messvakuumraumes (9) und dem zu messenden Medium eine Blendenanordnung (25) angeordnet ist, vorzugsweise enthaltend eine Schraubenblende (20).

## Claims

1. Vacuum measuring cell with a membrane (2, 41) arranged between two flat housing parts (1, 4) with a thickness in the range of 40 µm to 760 µm, wherein the first housing part (1) forms a vacuum reference chamber (10) and the second housing part (4) forms a vacuum measuring chamber (9) with connecting means (5) for connecting to the medium to be measured, and that the vacuum measuring cell in the region of the vacuum reference chamber (10) contains means for measuring the membrane deflection, **characterised in that** on the membrane surface (41 a) exposed to the medium to be measured is attached a structure formed in a targeted manner with vertical and/or overhanging steps (42) with a thickness in the range of 0.1 µm to 20 µm, wherein their width lies in the range from two to twenty times the structure thickness.

2. Measuring cell according to claim 1, **characterised in that** the structure [..]¹ the steps (42) have edges, whereby a shadowing occurs on deposit of a layer such that a deposition layer (40) precipitated from the medium on the membrane (2, 41) behaves substantially stress-free in relation to the membrane, whereby stress bending of the membrane (2, 41) is reduced.

3. Measuring cell according to claim 1 or 2, **characterised in that** the membrane (2, 41) substantially comprises ceramic such as Al₂O₃ and/ sapphire as monocrystalline Al₂O₃.

4. Measuring cell according to any of the preceding claims, **characterised in that** the vacuum measuring cell with the membrane (2, 41) forms a capacitative and/or an optical measuring device.

5. Measuring cell according to any of the preceding claims, **characterised in that** the diameter of the membrane lies in the range from 5 to 80 mm.

6. Measuring cell according to any of the preceding claims, **characterised in that** the structure on the membrane (2, 41) is arranged in the form of a grid with periodic and/or non-periodic spacing.

7. Measuring cell according to any of the preceding claims, **characterised in that** the structure is embedded in the membrane material.

8. Measuring cell according to any of the preceding claims, **characterised in that** on the membrane surface (41a) is deposited at least one layer which is structured and that the layer material preferably comprises Al₂O₃ and/or sapphire.

9. Measuring cell according to any of claims 1 to 8, **characterised in that** the structure has greatly overhanging steps so that in cross-section it has a table-like or mushroom like form, wherein preferably more than one such structure is arranged above each other so as to prevent a direct view through from the front to the base of the membrane at the openings in the structure.

10. Measuring cell according to any of the preceding claims, **characterised in that** the thickness of the structure lies in the range from 0.1 µm to 10 µm.

11. Measuring cell according to any of the preceding claims, **characterised in that** between the connecting means (5) of the vacuum measuring chamber (9) and the medium to be measured is arranged a diaphragm arrangement (25), preferably containing a screw diaphragm (20).

## Revendications

1. Cellule de mesure de vide, comprenant une membrane (2, 41) d'une épaisseur comprise entre 40 µm et 760 µm et disposée entre deux éléments plats (1, 4) du corps de cellule, dans laquelle le premier (1) desdits éléments constitue une chambre à vide de référence (10) et le second (4) une chambre à vide de mesure (9), cette dernière étant équipée de raccords (5) vers le milieu à mesurer, ladite cellule de mesure de vide comprenant par ailleurs, au niveau de la chambre à vide de référence (10), des moyens de mesure de la déviation de la membrane, **caractérisée par** la présence, sur la face de membrane (41a) exposée au milieu à mesurer, d'une structure de forme déterminée comprenant des paliers (42) verticaux et / ou saillants, l'épaisseur de ladite structure étant comprise entre 0,1 µm et 20 µm et la largeur desdits paliers étant comprise entre deux et vingt fois l'épaisseur de la structure.

2. Cellule de mesure selon la revendication 1 , **caractérisée par le fait que** les paliers (42) de la structure présentent des bords qui, lorsqu'une couche se dépose, produisent un effet d'écran de sorte telle qu'une couche (40) se déposant sur la membrane (2, 41) par séparation du milieu, agit essentiellement sans exercer de tension sur la membrane, ce qui réduit les déformations sous contrainte de celle-ci.

3. Cellule de mesure selon la revendication 1 ou 2, **caractérisée par le fait que** la membrane (2, 41) est principalement en céramique, par exemple en Al₂O₃, et/ou en saphir, par exemple en Al₂O₃ monocristallin.

4. Cellule de mesure selon l'une quelconque des revendications précédentes, **caractérisée par le fait que** l'ensemble cellule de mesure et membrane (2, 41) constitue un dispositif de mesure capacitive et / ou optique.

5. Cellule de mesure selon l'une quelconque des revendications précédentes, **caractérisée par le fait que** le diamètre de la membrane est compris entre 5 mm et 80 mm.

6. Cellule de mesure selon l'une quelconque des revendications précédentes, **caractérisée par le fait que** la structure à la surface de la membrane (2, 41) présente la forme d'une grille dont les éléments sont disposés à des intervalles réguliers et / ou irréguliers.

7. Cellule de mesure selon l'une quelconque des revendications précédentes, **caractérisée par le fait que** ladite structure est intégrée dans le matériau de la membrane.

8. Cellule de mesure selon l'une quelconque des revendications précédentes, **caractérisée par** au moins une couche structurée déposée sur la surface (41a) de la membrane et par le fait que ladite couche est, de préférence, en Al₂O₃ et / ou en saphir.

9. Cellule de mesure selon l'une quelconque des revendications 1 à 8, **caractérisée par le fait que** ladite structure présente des paliers très saillants qui, en coupe transversale, ont la forme d'une table ou d'un champignon, moyennant quoi, de préférence deux structures au moins sont superposées de telle sorte qu'elles empêchent, au niveau de leurs intervalles, toute vue directe sur le fond de la membrane à partir de la surface de celle-ci.

10. Cellule de mesure selon l'une quelconque des revendications précédentes, **caractérisée par le fait que** l'épaisseur de la structure est comprise entre 0,1 µm et 10 µm.

11. Cellule de mesure selon l'une quelconque des revendications précédentes, **caractérisée par** un dispositif obturateur (25) agencé entre les raccords (5) de la chambre à vide de mesure (9) et le milieu à mesurer, ledit dispositif comprenant, de préférence, un obturateur hélicoïdal (20).
